# EUROPÄISCHE PATENTSCHRIFT

(11) **EP 2 422 925 B1**
(45) Veröffentlichungstag und Bekanntmachung des Hinweises auf die Patenterteilung: **01.05.2013**
(21) Anmeldenummer: 10173827.6
(22) Anmeldetag: 24.08.2010
(51) Int. Cl.: B23Q 11/00, E21B 21/015

(54) **Abführeinrichtung**
Removal device
Dispositif d'évacuation

(43) Veröffentlichungstag der Anmeldung: 29.02.2012
(73) Patentinhaber: Homag Holzbearbeitungssysteme AG, 72296 Schopfloch (DE)
(72) Erfinder: Gringel, Martin, 72479, Strassberg (DE); Zeller, Robert, 72175, Dornhan (DE); Reich, Klaus, 72290, Loßburg (DE)
(74) Vertreter: HOFFMANN EITLE

(56) Entgegenhaltungen:
- WO-A1-2008/080222
- FR-A1- 2 909 018
- US-A- 5 772 367

## Beschreibung

### Technisches Gebiet

Die vorliegende Erfindung bezieht sich auf eine Abführeinrichtung zum Abführen von Partikeln an einem Bearbeitungsmittel, insbesondere Werkzeug oder Aggregat.

### Stand der Technik

Bei Bearbeitungsmaschinen, insbesondere für nichtmetallische Werkstoffe, zum Beispiel in der Holz-, Leder- und Schuhindustrie, kommen Absaugeinrichtungen zum Einsatz, die bei der Bearbeitung entstehende Späne bzw. Partikel aus dem Bearbeitungsbereich abtransportieren. Die Partikel werden anschließend mittels eines geeigneten Abscheiders, zum Beispiel eines Filters, aus der abgesaugten Luft abgeschieden. Die Abscheider werden beispielsweise im Maschinenaggregat, also etwa im Untergestell oder Tisch der Maschine untergebracht. Ein entsprechender Staub- und Späneabscheider ist beispielsweise aus der DE 1 174 600 bekannt. Der dortige Staub- und Späneabscheider arbeitet mit einer vertikal angeordneten, unten offenen, rohrförmigen Wirbelzelle, die die Partikel von der abgesaugten Luft abscheidet.

Ferner ist zur Absaugung von Spänen eine Spindelabsaugung bekannt, die jedoch große Absaugluftvolumenströme für eine ausreichende Absaugwirkung benötigt. Neben hohen Energiekosten einer solchen Absaugung entstehen dabei auch hohe Lärmemissionen. Dabei gestaltet sich die Absaugung von Staub und Spänen insbesondere in Fräsnuten mit der Spindelabsaugung äußerst schwierig, da ausreichend hohe Strömungsgeschwindigkeiten der Absaugluft hier schwer realisierbar sind.

Ferner sind Werkzeuge mit Turbinenelementen zur Staubabsaugungsunterstützung bei der spanenden Bearbeitung Stand der Technik. Ein solches Werkzeug ist aus der WO 2007/113140 A1 bekannt, die ein rotatorisches Schneidwerkzeug beschreibt, an dem ein Flügelrad koaxial angeordnet ist, das mit dem Werkzeug rotiert und dabei durch Ansaugen Staub und Späne entfernt, so dass sie anschließend von einer Absaugeinrichtung abgesaugt werden können. Solche Werkzeuge mit Flügelrädern bzw. Turbinenelementen zur Staubabsaugungsunterstützung bei der spanenden Bearbeitung haben den Nachteil, dass größere Späne oder Restteile mit angesaugt werden können, welche dann zu Unwuchten bis hin zur Zerstörung der Turbinenelemente oder zu einer Schädigung der Spindellager der Hauptspindel aufgrund der entstehenden Unwucht führen können. Ferner besteht die Gefahr, dass Fremdkörper, z.B. Maschinenschrauben von dem Flügelrad angesaugt, vom Flügelrad stark beschleunigt, und geschossartig durch den Arbeitsraum geschleudert werden, was ein Risiko für das Bedienpersonal darstellt. Daher verweigern Maschinenhersteller oft eine Freigabe für die Verwendung solcher Werkzeuge auf ihren Maschinen.

In der US 5 772 367 A wird eine Abführeinrichtung zum Abführen von Partikeln an einem Bearbeitungsmittel beschrieben, die ein Flügelrad, das eingerichtet ist, eine Luftströmung zum Abführen von Partikeln, die bei der Bearbeitung mittels des Bearbeitungsmittels entstehen, zu erzeugen, aufweist. Das Flügelrad ist so rotationsfest am Bearbeitungsmittel anbringbar, dass das Flügelrad mit dem Bearbeitungsmittel um dessen Bearbeitungsachse rotiert.

Aus der FR 2 909 018 A1 ist eine Abführeinrichtung zum Abführen von Partikeln an einem rotatorischen Bearbeitungsmittel bekannt, die ein koaxial am Bearbeitungsmittel angebrachtes Flügelrad zum Erzeugen eines Luftstroms zum Absaugen von Partikeln aufweist. Ein Filterelement zum Filtern des Luftstroms vor dem passieren des Flügelrades wird nicht beschrieben.

### Darstellung der Erfindung

Es ist daher Aufgabe der vorliegenden Erfindung eine Abführeinrichtung zum Abführen von Partikeln an einem Bearbeitungsmittel, insbesondere Werkzeug oder Aggregat, zur Verfügung zu stellen, die es ermöglicht, Partikel, insbesondere Späne, in unmittelbarer Nähe der Entstehungsstelle der Späne abzuführen und dabei die Anfälligkeit von Turbinenelementen oder Flügelrädern im Hinblick auf eine Beschädigung durch größere Späne oder Restteile vermeidet und auch eine Zerstörung der Turbinenelemente oder Flügelräder aufgrund von Unwuchten von anhaftenden, größeren Spänen oder Restteilen und damit auch eine Beschädigung der Spindellager der Hauptspindel aufgrund von entstehenden Unwuchten vermeidet.

Erfindungsgemäß wird diese Aufgabe durch eine Abführeinrichtung mit den Merkmalen des Patentanspruchs 1 und ein Werkzeug mit den Merkmalen des Patentanspruchs 7 gelöst. In den Unteransprüchen finden sich vorteilhafte Ausgestaltungen und Verbesserungen der Erfindung.

Demgemäß weist eine Abführeinrichtung zum Abführen von Partikeln an einem Bearbeitungsmittel, insbesondere Werkzeug oder Aggregat, ein Flügelrad auf, das eingerichtet ist, eine Luftströmung zum Abführen von Partikeln, die bei der Bearbeitung mittels des Bearbeitungsmittels entstehen, zu erzeugen. Erfindungsgemäß ist dem Flügelrad ein Abscheider vorgeschaltet, der Partikel aus der vom Flügelrad angesaugten Luft vor dem Passieren des Flügelrads abscheidet. Erfindungsgemäß ist dabei zumindest das Flügelrad so rotationsfest am Bearbeitungsmittel anbringbar, dass das Flügelrad mit dem Bearbeitungsmittel um dessen Bearbeitungsachse rotiert.

Das Flügelrad ermöglicht es, eine Luftströmung zum Abführen, bevorzugt zum Absaugen von Partikeln, die bei der Bearbeitung mittels des Bearbeitungsmittels entstehen, in unmittelbarer Nähe der Entstehungsstelle der Partikel an der Werkzeugschneide zu erzeugen. Durch das Absaugen der Späne mittels eines in unmittelbarer Nähe der Entstehungsstelle der Späne angeordneten Flügelrads kann auch bei kleineren, d. h. nicht so energieaufwendigen Absaugluftvolumenströmen eine ausreichende Absaugwirkung erzielt werden. Dadurch können nicht nur die Energiekosten gesenkt werden, sondern es ist auch eine Reduktion der Lärmemissionen möglich. Durch die entstehungsnahe Absaugung der Partikel, insbesondere der Späne und des Staubs, können daher die Umweltbelastungen reduziert werden. Der dem Flügelrad vorgeschaltete Abscheider ermöglicht es, zu verhindern, dass von der Luftströmung mit geförderte, größere Partikel, zum Beispiel Reststücke oder womöglich sogar Maschinenschrauben, in das Flügelrat geraten. Dadurch können zum einen direkte Beschädigungen durch den Aufprall der Teile auf das Flügelrad verhindert werden und zum anderen kann es verhindert werden, dass sich diese größeren Teile am Flügelrad anlagern und damit zu einer Unwucht des Flügelrads führen, die die Lebensdauer der Flügelradlagerung reduzieren kann. Ferner wird verhindert, dass größere Teile durch das Flügelrad weg katapultiert werden und dann eine Verletzungsgefahr für den Maschinenbediener darstellen. Der Abscheider ist dabei bevorzugt ein Filter mit Öffnungen, die die Luftströmung hindurch treten lassen, jedoch ein Hindernis bilden für Partikel ab einer bestimmten Größe. Dadurch, dass das Flügelrad so rotationsfest am Bearbeitungsmittel anbringbar ist, dass das Flügelrad mit dem Bearbeitungsmittel um dessen Bearbeitungsachse rotiert, lässt sich ein besonders einfacher und kostengünstiger Aufbau der Abführeinrichtung erzielen. Für das Flügelrad kann hierbei die Bearbeitungsachse des Bearbeitungsmittels als Rotationsachse verwendet werden, so dass für das Flügelrad keine zusätzliche Rotationsachse realisiert zu werden braucht. Ferner kann auf diese Weise die Luftströmung zum Abführen der Partikel in unmittelbarer Nähe am Bearbeitungsmittel, im Idealfall konzentrisch um die Bearbeitungsachse des Bearbeitungsmittels herum, erzeugt werden. Dadurch, dass das Flügelrad rotationsfest am Bearbeitungsmittel angeordnet ist, muss für das Flügelrad keine separate Antriebseinheit realisiert werden, was den Aufbau der Abführeinrichtung vereinfacht. Besonders bevorzugt ist das Flügelrad so rotationsfest am Bearbeitungsmittel angebracht, dass die Drehzahl von Flügelrad und Bearbeitungsmittel gleich sind. Dies stellt einen besonders einfachen, ausfallsicheren und kostengünstigen Aufbau dar. Bevorzugt ist es ebenso möglich, dass das Flügelrad rotationsfest mit dem Bearbeitungsmittel über eine Kupplung gekoppelt ist. Dadurch ist es möglich, das Flügelrad auch bei rotierendem Bearbeitungsmittel zum Stillstand zu bringen. Dies kann bei bestimmten Bearbeitungsaufgaben nützlich sein. Bevorzugt ist es ebenso möglich, dass das Flügelrad über eine getriebestufe rotationsfest mit dem Bearbeitungsmittel gekoppelt ist. Die Getriebestufe ermöglicht es, für das Flügelrad eine Drehzahl vorzusehen, die sich von der Drehzahl des Bearbeitungsmittels unterscheidet. Damit ist es möglich, mittels des Flügelrads eine optimale Luftströmung, unabhängig von der optimalen Drehzahl für das Bearbeitungsmittel, zu erzielen.

Gemäß der vorliegenden Erfindung ist der Abscheider drehfest mit dem Flügelrad verbunden und bildet besonders bevorzugt eine Einheit mit dem Flügelrad. Die drehfeste Anordnung des Abscheiders mit dem Flügelrad ermöglicht es, dass der Abscheider gemeinsam mit dem Flügelrad angetrieben werden kann, ohne dass für den Abscheider eine zusätzliche, eigene Antriebseinheit vorgesehen werden braucht. Bevorzugt ist der Abscheider dabei koaxial zum Flügelrad angeordnet und direkt mit dem Flügelrad gekoppelt. Dadurch können Abscheider und Flügelrad auf einer Welle angeordnet werden und es ist für den Abscheider kein Antriebsgetriebe erforderlich. Gemäß einer Variante der vorliegenden Erfindung, ist der Abscheider über ein Getriebe mit dem Flügelrad verbunden so dass Abscheider und Flügelrad mit unterschiedlichen Drehzahlen betreibbar sind. Besonders bevorzugt bilden Abscheider und Flügelrad jedoch eine Einheit, was eine besonders geringe Anzahl an unterschiedlichen bewegten Teilen und damit einen besonders einfachen und ausfallsicheren Aufbau ermöglicht. Ferner können aufgrund der so benötigten geringen Anzahl an Teilen die Herstellungskosten der Einheit aus Abscheider und Flügelrad niedrig gehalten werden. Werden Abscheider und Flügelrad als Einheit realisiert, können auch Lastspiele zwischen den ansonsten miteinander gekoppelten, unabhängigen, sich bewegenden Teilen vermieden werden. Dadurch kann die Geräuschentwicklung und der Verschleiß gerade im hohen Drehzahlbereich niedrig gehalten werden. Ferner kann eine Einheit aus Flügelrad und Abscheider bei geringem Gewicht besonders steif gestaltet werden, was für das Beschleunigungsverhalten vorteilhaft ist und die Geräuschentwicklung durch das Vermeiden von Schwingungen im System aus Flügelrad und Abscheider niedrig hält.

Gemäß einer bevorzugten Ausführungsform der vorliegenden Erfindung ist der Abscheider am Werkzeugschaft eines Bearbeitungswerkzeugs anbringbar. Dies ermöglicht eine besonders einfache, standardisierbare Anbringung des Abscheiders. Die Spindellagerung bildet dabei zugleich die rotatorische Lagerung des Abscheiders, wodurch auf eine zusätzliche Lagerung des Abscheiders verzichtet werden kann, was die Kosten für die Realisierung des Abscheiders senkt. Der Abscheider kann beispielsweise mittels Presspassung am Werkzeugschaft des Bearbeitungswerkzeugs angebracht werden, wodurch die Anbringung des Abscheiders technisch einfach realisierbar ist. Ein Abscheider kann dabei bevorzugt mittels Zwischenhülsen auf Werkzeugschäfte mit unterschiedlichem Durchmesser verwendet werden.

Gemäß einer bevorzugten Ausführungsform der vorliegenden Erfindung ist die Abführeinrichtung an einer Aufnahme für das Bearbeitungsmittel anbringbar. Dadurch kann die Abführeinrichtung unabhängig von dem Bearbeitungsmittel selbst angebracht werden. Da die Aufnahmen für Bearbeitungsmittel in weiten Bereichen standardisiert sind, ist es möglich, die Befestigung der Abführeinrichtung an einer entsprechenden Aufnahme ebenfalls zu standardisieren. Dadurch wird der Einsatz einer erfindungsgemäßen Abführeinrichtung flexibilisiert. Ferner werden durch die Standardisierung auch die Kosten für das Vorsehen einer Abführeinrichtung gesenkt.

Gemäß einer bevorzugten Ausführungsform der vorliegenden Erfindung weist der Abscheider ein Abscheidungsmittel in Form einer perforierten Blechscheibe mit Durchgangsöffnungen, bevorzugt in Form eines Schlitzbleches mit Schlitzen, auf. Die Luftströmung zum Abführen von Partikeln, die mittels des Flügelrads erzeugt wird, wird dann wenigstens teilweise durch die Durchgangsöffnungen des Abscheidungsmittels geleitet. Die Größe der Durchgangsöffnungen bestimmt dabei, welche Partikelgröße noch durch den Abscheider hindurch treten kann. Bevorzugt ist die Blechscheibe auswechselbar, so dass der Abscheider an bestimmte Materialien oder Einsatzbedingungen universell angepasst werden kann. Das Abscheidungsmittel ermöglicht es, durch das Flügelrad angesaugte Partikel, zum Beispiel Werkstückreststücke oder Fremdkörper, wie zum Beispiel Maschinenschrauben, aus dem angesaugten Luftstrom abzuscheiden. Dadurch wird vermieden, dass diese Partikel in Kontakt mit dem Flügelrad gelangen und die oben genannten Beschädigungen verursachen können. Die Gestaltung der perforierten Blechscheibe mit Durchgangsöffnungen in Form von Schlitzen ermöglicht es, durch die Anordnung der Schlitze ein spezifisches Partikeltransportverhalten des Abscheiders zu realisieren. Mittels der Ausrichtung der Schlitze kann eingestellt werden, wie stark Partikel vom Abscheider radial nach außen gefördert werden. Bevorzugt verlaufen die Schlitze radial nach außen, wodurch angesaugte Reststücke aus dem Ansaugbereich des Flügelrads gefördert werden.

Gemäß einer bevorzugten Ausführungsform der vorliegenden Erfindung ist das Abscheidungsmittel auf das Bearbeitungswerkzeug zugewandt, wenigstens abschnittsweise hohlflächenförmig, bevorzugt kegelförmig, paraboloidförmig oder hyperboloidförmig gewölbt. Durch die Wölbung wird die Filterfläche vergrößert, wodurch ein Zusetzen des Abscheidungsmittels durch Partikel seltener auftritt. Gleichzeitig wird durch die Wölbung ein Fördern von am Abscheidungsmittel hängen gebliebenen Partikeln radial nach außen ermöglicht, wodurch diese aus dem Ansaugbereich des Flügelrads gefördert werden.

Ein erfindungsgemäßes Werkzeug weist ein Bearbeitungswerkzeug und eine Abführeinrichtung auf, die am Schaft des Bearbeitungswerkzeugs befestigt ist. Die Abführeinrichtung kann dabei lösbar oder unlösbar, kraftschlüssig, formschlüssig oder stoffschlüssig am Schaft des Bearbeitungswerkzeugs angebracht sein. Besonders bevorzugt ist die Abführeinrichtung mittels Presssitz am Schaft des Bearbeitungswerkzeugs angebracht. Der Vorteil liegt hierbei darin, dass die Abführeinrichtung ohne zusätzliche Befestigungsteile spielfrei am Schaft befestigt werden kann. Bevorzugt ist die Abführeinrichtung auf den Schaft des Bearbeitungswerkzeugs aufgeschrumpft. Dadurch ergibt sich ein besonders fester Sitz der Abführeinrichtung am Schaft des Bearbeitungswerkzeugs. Das Anbringen der Abführeinrichtung am Schaft des Bearbeitungswerkzeugs bietet den Vorteil, dass Werkzeuge, bestehend aus Bearbeitungswerkzeug und Abführeinrichtung, als eigenständige Einheit vor dem Einsatz in die Maschine zusammengebaut werden können. Die Abführeinrichtung benötigt dann keine zusätzlichen Befestigungsmittel, zum Beispiel an der Aufnahme des Bearbeitungswerkzeugs oder anderen Maschinenteilen.

### Kurze Beschreibung der Zeichnungen

Die Erfindung wird im Folgenden anhand von Ausführungsbeispielen unter Bezugnahme auf die beiliegenden Figuren der Zeichnungen näher erläutert.

Von den Figuren zeigen:
- Fig. 1: eine perspektivische, schematische Darstellung einer erfindungsgemäßen Abführeinrichtung; und
- Fig. 2: eine schematische, perspektivische Darstellung eines Werkzeugs mit einer Abführeinrichtung gemäß dem Ausführungsbeispiel von Fig. 1.

In den Figuren bezeichnen dieselben Bezugszeichen gleiche oder funktionsgleiche Komponenten, soweit nichts Gegenteiliges angegeben ist.

### Ausführliche Beschreibung der bevorzugten Ausführungsformen

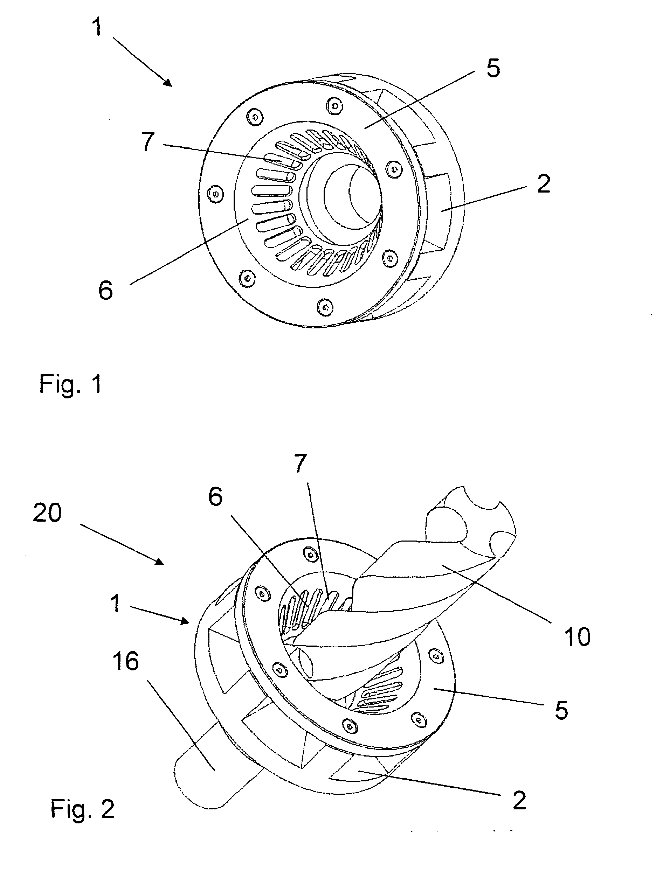

Fig. 1 zeigt eine perspektivische, schematische Darstellung einer erfindungsgemäßen Abführeinrichtung 1. Die Abführeinrichtung 1 weist ein Flügelrad 2 auf, das eingerichtet ist, eine Luftströmung zum Abführen von Partikeln, die bei der Bearbeitung mittels eines Bearbeitungsmittels entstehen, zu erzeugen. Das Flügelrad 2 ist in Fig. 1 im Hintergrund dargestellt. Im Vordergrund vor dem Flügelrad 2 ist ein Abscheider 5 dargestellt, der Partikel aus der vom Flügelrad 2 angesaugten Luft vor dem Passieren des Flügelrads 2 abscheidet. Gemäß diesem Ausführungsbeispiel weist der Abscheider 5 ein Abscheidungsmittel 6 in Form einer perforierten Blechscheibe mit Schlitzen 7 auf. Der Abscheider 5 ist bei diesem Ausführungsbeispiel mit dem Flügelrad 2 verschraubt. Durch das Flügelrad 2, welches im Betrieb rotiert, wird eine Luftströmung zum Abführen von Partikeln erzeugt. Bei diesem Ausführungsbeispiel wird die Luft im Bild von links her nach rechts im Bild angesaugt. Dabei wird die Luftströmung ganz oder wenigstens ein großer Teil davon durch die Schlitze 7 des Abscheidungsmittels 6 des Abscheiders 5 geführt. Dabei wird die Luft von größeren Partikeln, zum Beispiel Reststücken, Bruchteilen, usw. gefiltert, so dass diese nicht zum Flügelrad 2 gelangen können und dies vor solchen gröberen Partikeln geschützt ist. Die Partikel können daher nicht auf das Flügelrad 2 treffen und dieses beschädigen. Ferner wird vermieden, dass sich größere Partikel am rotierenden Flügelrad 2 anlagern und dort eine Unwucht verursachen, die zu einer Beschädigung des Flügelrads 2 oder von dessen Lagerung führt.

Fig. 2 zeigt eine schematische, perspektivische Darstellung eines Werkzeugs 20 mit einer Abführeinrichtung 1 gemäß dem Ausführungsbeispiel von Fig. 1. Das erfindungsgemäße Werkzeug 20 weist ein Bearbeitungswerkzeug 10, bei diesem Ausführungsbeispiel einen Fräser 10, und eine am Schaft 16 des Bearbeitungswerkzeugs 10 angebrachte Abführeinrichtung 1 auf. Die Abführeinrichtung 1 ist hierbei am Schaft 16 des Fräsers 10 mittels eines Presssitzes befestigt. Dadurch ist es möglich, das Werkzeug 20, bestehend aus der Abführeinrichtung 1 und dem Bearbeitungswerkzeug 10, als ganzes in einer Maschine einzusetzen, wobei das Werkzeug 20 lediglich mit seinem Schaft 16 in einer entsprechenden Aufnahme angebracht werden muss. Dadurch ergibt sich eine besonders schnelle und einfache Einsetzbarkeit des erfindungsgemäßen Werkzeugs 20. Ferner kann die erfindungsgemäße Abführeinrichtung 1 mittels entsprechender Distanzhülsen leicht an den Durchmesser von Schäften 16 von unterschiedlichen Bearbeitungswerkzeugen 10 angepasst werden. So lassen sich die unterschiedlichsten Bearbeitungswerkzeuge 10 mit der gleichen Abführeinrichtung 1 ausstatten. Gemäß diesem Ausführungsbeispiel ist die Abführeinrichtung 1 am Schaft 16 des Bearbeitungswerkzeugs 10 ohne weitere die Masse des Werkzeugs 20 erhöhende, zusätzliche Komponenten angebracht. Bei diesem Ausführungsbeispiel sind der Abscheider 5 und das Flügelrad 2 miteinander verschraubt. Erfindungsgemäß können der Abscheider 5 und das Flügelrad 2 ebenso als Einheit ausgebildet sein.

Obwohl die vorliegende Erfindung anhand bevorzugter Ausführungsbeispiele vorliegend beschrieben wurde, ist sie darauf nicht beschränkt, sondern auf vielfältige Weise modifizierbar, so wie in den Ansprüchen definiert.

### Bezugszeichenliste

- 1: Abführeinrichtung
- 2: Flügelrad
- 5: Abscheider
- 6: Abscheidungsmittel
- 7: Schlitz
- 10: Bearbeitungswerkzeug
- 16: Schaft
- 20: Werkzeug

## Patentansprüche

1. Abführeinrichtung (1) zum Abführen von Partikeln an einem Bearbeitungsmittel (10), insbesondere Werkzeug oder Aggregat,
mit einem Flügelrad (2), das eingerichtet ist, eine Luftströmung zum Abführen von Partikeln, die bei der Bearbeitung mittels des Bearbeitungsmittels (10) entstehen, zu erzeugen,
wobei zumindest das Flügelrad (2) so rotationsfest am Bearbeitungsmittel (10) anbringbar ist, dass das Flügelrad (2) mit dem Bearbeitungsmittel (10) um dessen Bearbeitungsachse rotiert,
**dadurch gekennzeichnet, dass** die Abführeinrichtung (1) einen dem Flügelrad (2) vorgeschalteten Abscheider (5) aufweist, der Partikel aus der vom Flügelrad (2) angesaugten Luft vor dem Passieren des Flügelrads (2) abscheidet, wobei
der Abscheider (5) drehfest mit dem Flügelrad (2) verbunden ist, vorzugsweise eine Einheit bildet; oder
der Abscheider (5) direkt mit dem Flügelrad (2) gekoppelt ist, oder der Abscheider (5) über ein Getriebe mit dem Flügelrad so verbunden ist, dass der Abscheider (5) und das Flügelrad (2) mit unterschiedlichen Drehzahlen betreibbar sind.

2. Abführeinrichtung (1) nach Anspruch 1,
**dadurch gekennzeichnet, dass**
der Abscheider (5) am Werkzeugschaft eines Bearbeitungswerkzeugs (10) anbringbar ist.

3. Abführeinrichtung (1) nach einem der vorhergehenden Ansprüche,
**dadurch gekennzeichnet, dass**
die Abführeinrichtung (1) an einer Aufnahme für das Bearbeitungsmittel (10) anbringbar ist.

4. Abführeinrichtung (1) nach einem der vorhergehenden Ansprüche,
**dadurch gekennzeichnet, dass**
der Abscheider (5) ein Abscheidungsmittel (6) in Form einer perforierten Blechscheibe mit Durchgangsöffnungen (7), bevorzugt in Form eines Schlitzbleches mit Schlitzen (7), aufweist.

5. Abführeinrichtung (1) nach Anspruch 4,
**dadurch gekennzeichnet, dass**
die Schlitze (7) radial nach außen verlaufen.

6. Abführeinrichtung (1) nach einem der vorhergehenden Ansprüche,
**dadurch gekennzeichnet, dass**
das Abscheidungsmittel (6) auf das Bearbeitungswerkzeug (10) zugewandt wenigstens abschnittsweise hohlflächenförmig, insbesondere kegelförmig, paraboloidförmig oder hyperboloidförmig, gewölbt ist.

7. Werkzeug (20) mit einer Abführeinrichtung (1) nach einem der Ansprüche 1 bis 6 und einem Bearbeitungswerkzeug (10),
wobei die Abführeinrichtung (1) am Schaft (16) des Bearbeitungswerkzeugs (10) befestigt ist.

8. Werkzeug (20) nach Anspruch 7,
**dadurch gekennzeichnet, dass**
die Abführeinrichtung (1) lösbar oder unlösbar, kraftschlüssig, formschlüssig oder stoffschlüssig am Schaft (16) des Bearbeitungswerkzeugs (10) angebracht ist.

## Claims

1. Removal device (1) for removing particles at a machining means (10), in particular tool or unit, having an impeller wheel (2) which is equipped to generate an air stream for removing particles which are produced when machining by means of the machining means (10), wherein at least the impeller wheel (2) can be attached to the machining means (10) to be resistant to rotation so that the impeller wheel (2) rotates with the machining means (10) about its machining axis, **characterised in that** the removal device (1) has a separator (5) upstream of the impeller wheel (2) which separates particles from the air drawn in by the impeller wheel (2) before passing the impeller wheel (2), wherein the separator (5) is connected to the impeller wheel (2) to be resistant to torsion, preferably forms a unit, or the separator (5) is coupled directly to the impeller wheel (2), or the separator (5) is connected to the impeller wheel via a gear so that the separator (5) and the impeller wheel (2) can be operated at different speeds.

2. Removal device (1) according to claim 1, **characterised in that** the separator (5) can be attached to the tool shaft of a machining tool (10).

3. Removal device (1) according to one of the preceding claims, **characterised in that** the removal device (1) can be attached to a seat for the machining means (10).

4. Removal device (1) according to one of the preceding claims, **characterised in that** the separator (5) has a separating means (6) in the form of a perforated sheet metal disc with passage openings (7), preferably in the form of a slotted plate with slots (7).

5. Removal device (1) according to claim 4, **characterised in that** the slots (7) run radially outwards.

6. Removal device (1) according to one of the preceding claims, **characterised in that** the separating means (6) is bent onto the machining tool (10) facing it at least in some sections to be tapered, in particular conical, like a paraboloid or hyperboloid.

7. Tool (20) having a removal device (1) according to one of claims 1 to 6 and a machining tool (10), wherein the removal device (1) is attached to the shaft (16) of the machining tool (10).

8. Tool (20) according to claim 7, **characterised in that** the removal device (1) is attached non-positively, positively or integrally to the shaft (16) of the machining tool (10) to be releasable or non-releasable.

## Revendications

1. Dispositif d'évacuation (1) pour évacuer des particules sur un dispositif d'usinage (10), notamment un outil ou un groupe de machines,
- avec une roue à ailettes (2) qui est installée de manière à produire un courant d'air destiné à évacuer les particules qui sont engendrées lors de l'usinage au moyen du dispositif d'usinage (10),
- au moins la roue à ailettes (2) pouvant être agencée de telle manière, solidaire en rotation, sur le dispositif d'usinage (10) que la roue à ailettes (2) tourne avec le dispositif d'usinage (10) autour de l'axe de rotation de celui-ci,
- **caractérisé en ce que** le dispositif d'évacuation (1) comporte un collecteur / séparateur (5) qui est placé en amont de la roue à ailettes (2) et qui collecte des particules provenant de l'air aspiré par la roue à ailettes (2) avant le passage dans la roue à ailettes (2),
- le collecteur (5) étant assemblé, solidaire en rotation, à la roue à ailettes (2), formant de préférence une unité, ou le collecteur (5) étant couplé directement à la roue à ailettes (2) ou le collecteur (5) étant assemblé à la roue à ailettes
par l'intermédiaire d'un mécanisme de transmission de telle sorte que le collecteur (5) et la roue à ailettes (2) peuvent fonctionner avec des vitesses de rotation différentes.

2. Dispositif d'évacuation (1) selon la revendication 1, **caractérisé en ce que** le collecteur (5) peut être agencé sur la tige d'outil d'un outil d'usinage (10).

3. Dispositif d'évacuation (1) selon l'une des revendications précédentes, **caractérisé en ce que** le dispositif d'évacuation (1) peut être agencé sur un logement destiné au dispositif d'usinage (10).

4. Dispositif d'évacuation (1) selon l'une des revendications précédentes, **caractérisé en ce que** le collecteur (5) comporte un moyen de collecte (6) sous la forme d'un disque en tôle perforé avec des ouvertures de passage (7), de préférence sous la forme d'une tôle à fentes avec des fentes (7).

5. Dispositif d'évacuation (1) selon la revendication 4, **caractérisé en ce que** les fentes s'étendent de façon radiale vers l'extérieur.

6. Dispositif d'évacuation (1) selon l'une des revendications précédentes, **caractérisé en ce que** le moyen de collecte (6) est cintré, en direction de l'outil d'usinage (10), au moins en partie en forme de surface creuse, notamment en forme de sphère, de paraboloïde ou d'hyperboloïde.

7. Outil (20) avec un dispositif d'évacuation (1) selon l'une des revendications 1 à 6 et avec un outil d'usinage (10), le dispositif d'évacuation (1) étant fixé sur la tige (16) de l'outil d'usinage (10).

8. Outil (20) selon la revendication 7, **caractérisé en ce que** le dispositif d'évacuation (1) est monté, amovible ou non, sur la tige (16) de l'outil d'usinage (10) par force, par concordance de forme ou par liaison de matière.
